(19) Europäisches Patentamt
European Patent Office
Office européen des brevets

(11) Publication number: **0 590 803 A1**

(12) **EUROPEAN PATENT APPLICATION**

(21) Application number: **93306941.1**

(22) Date of filing: **02.09.93**

(51) Int. Cl.5: **C08G 18/50**, C08G 18/65, C08K 7/10

(30) Priority: **29.09.92 US 953174**

(43) Date of publication of application: **06.04.94 Bulletin 94/14**

(84) Designated Contracting States: **DE FR GB**

(71) Applicant: **TEXACO CHEMICAL COMPANY**
**3040 Post Oak Boulevard**
**Houston, Texas 77056(US)**

(72) Inventor: **Rice, Doris Marvin**
**6008 Danwood Drive**
**Austin, Texas 78759(US)**

(74) Representative: **Brock, Peter William et al**
**UROUHART-DYKES & LORD**
**91 Wimpole Street**
**London W1M 8AH (GB)**

(54) **Reinforced reaction injection moulded polyurea elastomer.**

(57) Reinforced reaction injection moulded polyurea elastomers, suitable for producing automotive body panels can be made by reacting, in a closed mould, an (A) component, comprising a polyisocyanate, a (B) component, comprising

(1) amine terminated polyethers; and

(2) a chain extender; and a filler.

The chain extender is used in an amount that would provide an unfilled elastomer with a neat modulus between 0.14 and 0.41 GPa (20,000 and 60,000 psi); the filler is used in an amount that would provide a filled elastomer with a filled modulus between 1.38 and 2.07 GPa (200,000 and 300,000 psi). The high filler loading, e.g. between 20 and 45% by weight, is possible because the (A) component has a temperature between 49 and 66 °C (120 and 150 °F), the (B) component has a temperature between 66 and 93 °C (150 and 200 °F), and the (A) and (B) components are reacted at a temperature of 49 to 99 °C (120 to 210 °F).

EP 0 590 803 A1

Rank Xerox (UK) Business Services
(3.10/3.09/3.3.4)

The invention is related to the field of reinforced reaction injection moulded elastomers. More specifically, this invention is related to reaction injection moulded polyurea elastomers, suitable for making shaped articles, such as automotive body panels.

Reinforced reaction injection moulded (RRIM) elastomers (also known as filled RIM elastomers), and particularly RRIM polyurethanes and RRIM polyureas have replaced metals for many applications. In particular, these RRIM elastomers have been used to form automotive body panels. A RRIM elastomer automotive body panel must have several properties, including good dimensional stability, sufficient stiffness to bear the panel's own weight, enough flexibility to withstand impact damage, and thermal expansion properties close to those of metal automotive body panels, so that the RRIM panels do not interfere with metal panels as they expand and contract. Adding filler to a RIM elastomer is desirable, in that it reduces the coefficient of linear thermal expansion (CLTE) of the RIM part (thereby making it more compatible with steel), and it reduces the cost of the part.

Using current technology, exterior polyurea RRIM automotive body panels typically include a reinforcing filler, in an amount of 15 to 25 wt.% of the total component weight. The filler raises the flexural modulus (hereinafter "modulus") of the body panel, from a neat (unfilled) modulus of 0.48 to 0.62 GPa (70,000 to 90,000 psi) to the range from 1.38 to 2.07 GPa (200,000 to 300,000) desired for an automotive vertical body panel. This provides the panel with sufficient stiffness to bear its own weight without deforming, and lowers its coefficient of liner thermal expansion to a tolerable level.

Adding more than 25 wt.% of filler to the RRIM system would provide even lower CLTE values, closer to those of steel automotive body panels. There are, however, two significant problems associated with higher filler levels. Firstly, conventional RRIM polyurea elastomer systems exhibit poor processing with filler levels above 25%. This poor processing or mixing results in inferior RRIM polyurea elastomer parts. For example, these parts will have poor and erratic properties, such as tensile strength and elongation. In addition, poor mixing can result in streaks and other visual blemishes, and can also result in blistering upon post-curing. Secondly, the addition of filler material to a RIM polyurea elastomer body panel tends to degrade its resistance to impact damage, and this degradation typically increases with increasing filler levels. Therefore, current technology allows the fabrication of less expensive RRIM automotive body panels with lower CLTE through the addition of filler, but this is accomplished at te expense of decreasing the resistance of the panels to impact damage. Adding even higher levels of filler to a RRIM polyurea elastomer system to obtain additional CLTE benefits would be expected to decrease even further the resistance to impact damage.

We have discovered a method which surmounts the problems associated with adding filler in amounts greater than 25 wt.%, so that further cost and CLTE benefits are derived and resistance to impact damage is increased compared to body panels made by current technology. The higher levels of filler made possible by the present invention unexpectedly increase the resistance of the panels to minor impacts, as compared to traditional RRIM polyurea elastomer body panels, and provide the RRIM polyurea elastomer with thermal expansion properties much closer to those of steel than conventional systems.

"Advances in Polyurea RIM for Automotive Applications", Grigsby, R.A., and Rice, D.M., SAE Technical Paper Series No. 890696 was presented at the International Congress and Exposition, Detroit, Michigan, between February 27 and March 3, 1989. The article describes a RRIM polyurea elastomer with a neat modulus of 0.52 GPa (75,000 psi) which has been reinforced with up to 35% wollastonite. The RRIM polyurea elastomer described in the article is typical of traditional body panel RRIM formulations (i.e., high neat modulus elastomers) as evidenced by an IZOD impact value of 89.85 J/m (20.2 in-lb/in.).

US-A-4871789 describes a high neat modulus RRIM elastomer, i.e. a conventional body panel formulation, which includes a reinforcing filler and a supplementary filler, with an aspect ratio of below 7, to increase distinctness of image. Although US-A-4871789 describes levels of reinforcing filler of up to 70% by weight, it expressly acknowledges that reinforcing filler levels above 20% by weight provide particularly poor processing. The patent states that by adding a supplementary filler, reinforcing filler levels of up to 40% of higher can be processed. However, a shortcoming of this method, as indicated by Table 2, col. 9, of US-A-4871789, is that the addition of supplementary filler has a detrimental effect on resistance to impact damage and coefficient of linear thermal expansion.

The present invention provides a novel polyurea elastomer having superior resistance to impact damage and a coefficient of linear thermal expansion much closer to that of steel when compared to conventional filled polyurea elastomers. A method for making the polyurea elastomer of the present invention is also provided.

One embodiment of the present invention provides a method for making a reinforced reaction injection moulded polyurea elastomer, comprising reacting, in a closed mould, an (A) component, comprising a polyisocyanate, and a (B) component, comprising

(1) amine terminated polyethers; and
(2) a chain extender; and a filler,

in which the chain extender is used in an amount that would provide an unfilled elastomer with a neat modulus between 0.14 and 0.41 GPa (20,000 and 60,000 psi); the filler is used in an amount that would provide a filled elastomer with a filled modulus between 1.38 and 2.07 GPa (200,000 and 300,000 psi), and in which the (A) component has a temperature between 49 and 66 °C (120 and 150 °F), the (B) component has a temperature between 66 and 93 °C (150 and 200 °F), and the (A) and (B) components are reacted at a temperature of 49 to 99 °C (120 to 210 °F).

The present invention also provides a reinforced reaction injection moulded polyurea elastomer with a neat modulus of between 0.14 and 0.41 GPa (20,000 and 60,000 psi); containing sufficient filler to raise the modulus of the polyurea elastomer to a filled modulus of between 1.38 and 2.07 GPa (200,000 and 300,000 psi), produced by such a method, and automotive body panels made from that elastomer.

Surprisingly, the RRIM polyurea elastomers produced according to the present invention have a higher resistance to impact damage than do conventional RRIM polyurea elastomers. This is surprising, because increasing levels of filler tend to degrade the impact strength of the RRIM polyurea elastomers. Further advantages of the high filler level are lower cost, in some instances, while the expansion characteristics of the elastomer more closely approximate those of steel than do previously available elastomers.

Figures 1 to 4 of the accompanying Drawings are plots of impact strength (IZOD and DYNATUP) versus flexural modulus; comparing RRIM polyurea elastomers of the present invention with conventional RRIM polyurea elastomers.

It has been discovered that a RRIM polyurea elastomer with a high filled modulus, a low coefficient of linear thermal expansion (CLTE), and a high impact strength, can be made by incorporating a filler material, in amounts of e.g. up to 45% by weight of the elastomer, into an elastomer with a low neat modulus. The resulting elastomer has a filled modulus making it suitable for use in automotive body panel applications, and exhibits a combination of superior CLTE (closer to that of steel than are conventional RRIM elastomers) and high resistance to cracking. It is believed that this combination was not available in a RRIM polyurea elastomer before the present invention.

The isocyanates employed in component (A) are those known to one skilled in the art. Thus, for instance, they can include aliphatic isocyanates of the type described in US-A-4748192. Accordingly, these aliphatic isocyanates are typically diisocyanates and, more especially, are the trimerized or the biuretic form of an aliphatic diisocyanate, such as hexamethylene diisocyanate, or the bifunctional monomer of a tetraalkyl xylene diisocyanate, such as tetramethyl xylene diisocyanate. Cyclohexane diisocyanate is also to be considered a preferred aliphatic isocyanate. Other useful aliphatic polyisocyanates are described in US-A-4705814. They include aliphatic diisocyanates, for example alkylene diisocyanates having 4 to 12 carbon atoms in the alkylene group, such as 1,12-dodecane diisocyanate and 1,4-tetramethylene diisocyanate. Also described are cycloaliphatic diisocyanates such as 1,3 and 1,4-cyclohexane diisocyanate, as well as any desired mixture of these isomers, 1-isocyanato-3,3,5-trimethyl-5-isocyanatomethylcyclohexane (isophorone diisocyanate); and 4,4'-, 2,2'- and 2,4'-dicyclohexylmethane diisocyanate, as well as the corresponding isomer mixtures.

A wide variety of aromatic polyisocyanates are preferred to form the polyurea elastomer according to the present invention. Typical aromatic polyisocyanates include p-phenylene diisocyanate, polymethylene polyphenylisocyanates, 2,6-toluene diisocyanate, dianisidine diisocyanate, bitolylene diisocyanate, naphthalene-1,4-diisocyanate, bis(4-isocyanatophenyl)methane, bis(methyl isocyanatophenyl)methanes such as bis(3-methyl-4-isocyanatophenyl)methane, and 4,4'-diphenylpropane diisocyanate.

Other aromatic polyisocyanates that can be used in the practice of the invention are methylene-bridged polyphenyl polyisocyanate mixtures which have a functionality of 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, US-A-2683730; US-A-2950263; US-A-3012008; US-A-3344162; and US-A-3362979.

Usually methylene-bridged polyphenyl polyisocyanate mixtures contain 20 to 100 weight percent of methylene diphenyldiisocyanate isomers, with the remainder being polymethylene polyphenyl diisocyanates having higher functionalities and higher molecular weights. Typical of these are polyphenyl polyisocyanate mixtures containing 20 to 100 weight percent of diphenyldiisocyanate isomers, of which 20 to 95 weight percent is the 4,4'-isomer, with the remainder being polymethylene polyphenyl polyisocyanates of higher molecular weight and functionality with an average functionality of 2.1 to 3.5. These isocyanate mixtures are

known, commercially available materials, and can be prepared by the process described in US-A-3362979.

By far the most preferred aromatic polyisocyanate is methylene bis(4-phenylisocyanate) or MDI. Pure MDI, quasi-prepolymers of MDI, and modified pure MDI, are all useful. Materials of this type may be used to prepare suitable elastomers. Since pure MDI is a solid and, thus, may be inconvenient to use, liquid products based on MDI or methylene bis(4-phenylisocyanate) are preferably used herein. US-A-3394164 describes a liquid MDI product. More generally, uretonimine-modified pure MDI is included also. This product is made by heating pure distilled MDI in the presence of a catalyst. The liquid product is a mixture of pure MDI and modified MDI and is represented as follows:

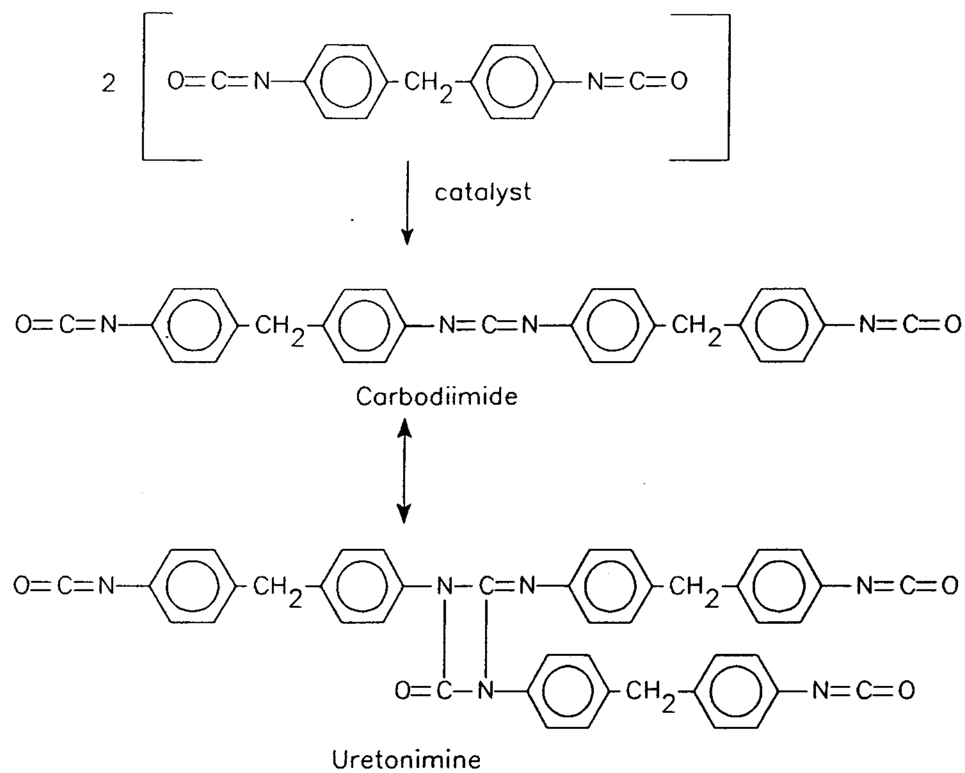


Carbodiimide

Uretonimine

Examples of commercial materials of this type are Dow's ISONATE® 125M (pure MDI) and ISONATE® 143L ("liquid" MDI). Preferably, the amount of isocyanate used is the stoichiometric amount, based on all the ingredients in the formulation, or greater than the stoichiometric amount.

Of course, the term isocyanate also includes quasi-prepolymers of isocyanates or polyisocyanates with active hydrogen-containing materials. The active-hydrogen containing materials of component (A) can include, but are not limited to, a polyol or polyols, a high molecular weight polyoxyalkyleneamine or combinations thereof.

The polyols used to prepare these quasi-prepolymers include polyether polyols and polyester diols, triols and tetrols, having an equivalent weight of at least 67, and preferably from 1,000 to 3,000. Dipropylene glycol is commonly used. Polyether diols of about 1,000 equivalent weight are specially preferred. The polyethers may be prepared from ethylene oxide, propylene oxide, butylene oxide, or mixtures of propylene oxide, butylene oxide and/or ethylene oxide.

The quasi-prepolymers can also be made from amine terminated polyethers, including primary and secondary amine terminated polyether polyols of greater than 1,500 average molecular weight having a functionality from 2 to 6, preferably from 2 to 3, and an amine equivalent weight of 750 to 4,000. Mixtures of amine terminated polyethers may be used. In a preferred embodiment, amine terminated polyether diols with an average molecular weight of at least 2,000 are used. These materials may be made by various methods known in the art.

The amine terminated polyether resins useful for this purpose, for example, are polyether resins made from an appropriate initiator to which lower alkylene oxides, such as ethylene oxide, propylene oxide, butylene oxide or mixtures thereof, are added, and the resulting hydroxyl terminated polyol is then aminated.

When two or more oxides are used, they may be present as random mixtures or as blocks of one or the other polyether. In the amination step, it is highly desirable that the terminal hydroxyl groups in the polyol be essentially all secondary hydroxyl groups, for ease of amination. Normally, the amination step does not completely replace all the hydroxyl groups. However, most of the hydroxyl groups are replaced by amine groups. Therefore, in a preferred embodiment, the amine terminated polyether resins useful in this invention have more than 50 percent of their active hydrogens in the form of amine hydrogens. If ethylene oxide is used, it is desirable to cap the hydroxyl terminated polyol with a small amount of higher alkylene oxide, to ensure that the terminal hydroxyl groups are essentially all secondary hydroxyl groups. The polyols so prepared are then reductively aminated by known techniques, for example, as described in US-A-3654370.

In the practice of this invention, a single high molecular weight amine terminated polyether resin may be used. Also, mixtures of high molecular weight amine terminated polyols, such as mixtures of di- and tri-functional materials, and/or materials of different molecular weight or different chemical compositions, may be used.

Also, high molecular weight amine terminated polyethers, or simply polyether amines, may be included in component (A) and may be used alone or in combination with the aforestated polyols. The term "high molecular weight" is intended to include polyether amines having a molecular weight of at least 2,000. Particularly preferred are the JEFFAMINE® series of polyether amines available from Texaco Chemical Company; they include JEFFAMINE D-2000, JEFFAMINE D-4000, JEFFAMINE T-3000 and JEFFAMINE T-5000, which are described with particularity in Texaco Chemical Company's product brochure entitled THE JEFFAMINE POLYOXYALKYLENEAMINES.

The (B) component of the present RRIM polyurea elastomer comprises an amine terminated polyether, including amine terminated polyether polyols, a chain extender and a filler material.

The amine terminated polyethers useful in the (B) component can be the same as those which are useful in the (A) component. The amine terminated polyethers are employed in an amount between 20 and 45%, and preferably in an amount between 25% and 40%, based on the total weight of the liquid components, excluding filler. Those skilled in the art will understand that as more quasi-prepolymer is used in component (A), less amine terminated polyether will be used in component (B), and *vice versa*.

The chain extenders useful in this invention include, for example, such aromatic amines as 1-methyl-3,5-diethyl-2,4-diaminobenzene, 1-methyl-3,5-diethyl-2,6-diaminobenzene (both of these materials are also called diethyltoluenediamine or DETDA, and are commercially available as ETHACURE 100 from the Ethyl Corporation, Baton Rouge, LA), 1,3,5-triethyl-2,6-diaminobenzene, and 3,5,3',5'-tetraethyl-4,4'-diaminodiphenylmethane. Particularly preferred aromatic diamine chain extenders are 1-methyl-3,5-diethyl-2,4-diaminobenzene, or a mixture of this compound with 1-methyl-3,5-diethyl-2,6-diaminobenzene. It is within the scope of this invention to include some aliphatic chain extender materials as described in US-A-4246363 and US-A-4269945.

Other chain extenders will be apparent to those skilled in the art, and the above recitation is not intended to be a limitation on the invention claimed herein.

The chain extender is employed in an amount necessary to provide a polyurea elastomer having a neat modulus between 0.14 and 0.41 GPa (20,000 and 60,000 psi), preferably between 0.21 and 0.34 GPa (30,000 and 50,000 psi) and more preferably between 0.21 and 0.28 GPa (30,000 and 40,000 psi). The amount of chain extender required to provide a polyurea elastomer with a desired neat modulus can readily be determined by the skilled practitioner. This amount is generally between 12 to 15 wt.%, based upon the weight of the components (A) and (B), excluding any filler material.

The filler materials can be employed in component (A) or (B), and preferably they are employed in component (B). These materials are preferably mineral particles, such as calcium metasilicate, milled glass, flaked glass, mica and glass spheres, which have been surface treated with an agent such as an amino silane or an epoxy silane. The surface agent can also be selected from amine terminated titanate and zirconate coupling agents, which are available from Kenrich Petrochemical, Inc., Bayonne, New Jersey. The surface agent functions to provide a chemical bond between the polyurea elastomer and the filler materials. One particularly preferred mineral particle is calcium metasilicate, also known as wollastonite. An example is G-RRIM Wollastokup, a surface treated wollastonite, available from NYCO, a division of Canadian Pacific (U.S.), Inc., Willsboro, New York. Another preferred particle is mica. A commercially available mica useful in the present invention is HIMOD 450$^{TM}$, a 17$\mu$m mica product, available from KMG Minerals, King Mountain, North Carolina.

The filler materials are employed in an amount sufficient to raise the modulus of the polyurea elastomer to between 1.38 and 2.079 GPa (200,000 and 300,000 psi) and preferably to between 1.38 and 1.72 GPa (200,000 and 250,000 psi). The amount of filler material required to raise the modulus of the polyurea

elastomer to the desired level can readily be determined by the skilled practitioner. The amount required is dependent upon the type of filler used and the neat modulus of the elastomer, and for the practice of this invention it can vary between 20 to 45 wt.% based upon the total weight of components (A) and (B), preferably between 20 and 45 wt.%, more preferably 25 and 40 wt.%, and most preferably between 30 and 40 wt.%.

The filler materials useful in the present invention generally have a length of 10 to 300 µm, and an aspect ratio of 8 to 100, preferably 9 to 50, more preferably 10 to 30, and most preferably 11 to 20.

Optionally, the polyurea elastomer can include an internal mould release agent to facilitate the removal of the cured elastomer from an open or closed mould. While the release agent, if employed, can be incorporated into the (A) or (B) component, it is preferably incorporated in the (B) component. The internal mould release agents useful in the present invention are known to those skilled in the art; they include, but are not limited to, zinc stearate and silicone agents.

Advantageously, the (A) and (B) components react to form the present elastomer system without the aid of a catalyst. If desired, however, a catalyst can be used. The catalysts that can be used to promote the reaction described above are the ones known to those skilled in the art. Particularly preferred are tertiary amine catalysts. 2,2'-dimorpholinodiethyl ether, N,N'-dimethylpiperazine, N-butylmorpholine, N-methylmorpholine, N-ethylmorpholine, bis (2,2'-dimethylamino) ethyl ether, 2-(2-dimethylaminoethoxy)ethanol, N,N,N'-trimethyl-N'-hydroxyethyl-bisaminoethyl ether, 4-(2-methoxyethyl) morpholine, and blends thereof are representative of preferred catalysts for use herein.

Pigments, for example titanium dioxide, may be incorporated in the elastomer system, preferably in the (B) component, to impart colour to the elastomer.

Upon release from the mould, the polyurea elastomers according to the present invention can be post cured at a temperature of at least 121 °C (250 °F) to drive out any gasses before painting. If higher temperature service is required, the parts can be post cured up to 205 °C (400 °F). A post cured temperature of 163 °C (325 °F) for 30 minutes is a good standard condition for RRIM polyurea elastomer body panels.

The (A) component and (B) component of the present polyurea elastomer system are combined or mixed under high pressure; most preferably, they are impingement- mixed directly in the high pressure equipment, for example, a Cincinnati Milacron RRIM machine. Before mixing, the component which contains the filler material (preferably the (B) component) is heated to a temperature sufficient to reduce its viscosity so that it can be processed in the RRIM machine. For the high filler levels of the present invention, this is a temperature between 66 and 93 °C (150 and 200 °F), and more preferably between 71 and 82 °C (160 and 180 °F). This temperature is higher than the 49 to 45 °C (120 to 130 °F) typical of conventional systems. The (A) and (B) components are impingement mixed at 10 to 14 MPa (1,500 to 2,000 psi) in the RIM head to effectuate an intimate mixing of the two components and, thus, the formation of the elastomer system, which is then delivered into the mould via the RIM equipment.

EXAMPLES

The following Examples illustrate the superiority of lower neat modulus highly filled polyurea RIM elastomers over present art. Damage resistance was measured by an IZOD impact tester at 24 °C (75 °F) and a Model 8250 Dynatup impact tester using a 45.4 Kg (100 lb) dart travelling at 135 m/sec (5300 in/sec) at impact. With the Dynatup, impact properties were measured at 24 °C (75 °F) and -29 °C (-20 °F). Values for Dynatup are expressed in Joules (J) and inch pounds (in.lb). Values for IZOD are expressed in Joules per metre (J/m) and inch pound per inch (in.lb/in).

In the Examples, three general types of formulation will be discussed. For convenience, the types have been assigned the following names:

LOWMOD - RRIM elastomers based on formulations having a neat modulus of approx. 0.24 GPa (35,000 psi) and containing enough filler to bring the modulus up into the 1.38 to 2.07 GPa (200,000 to 300,000 psi) range required for body panels.

MIDMOD - RRIM elastomers based on formulations having a neat modulus of approx. 0.38 GPa (55,000 psi) and containing enough filler to bring the modulus up into the 1.38 to 2.07 GPa (200,000 to 300,000 psi) range required for body panels.

HIMOD - RRIM elastomers based on formulations having a neat modulus of approx. 0.52 GPa (75,000 psi) and containing enough filler to bring the modulus up into the 1.38 to 2.07 GPa (200,000 to 300,000 psi) range required for body panels.

Materials Used

| | |
|---|---|
| Isocyanate A - | a quasi prepolymer prepared by mixing 60 pbw of ISONATE® 143L and 40 pbw of THANOL® PPG-2000 and letting them react at ambient conditions for several days. |
| Isocyanate B - | MONDUR® 1419, an MDI-based isocyanate sold commercially by Mobay Chemical Co. |
| TEXRIM® LMT-3001 - | a polyetheramine blend having an amine equivalent weight of approx. 1000 sold commercially by Texaco Chemical Company. It was designed for use in body panel formulations. |
| TEXRIM® LMT-4100 - | a polyetheramine blend having an amine equivalent weight of about 1500 sold commercially by Texaco Chemical Company. It was designed for use in fascia formulations. |
| DETDA - | diethyltoluenediamine, a product of Ethyl Corp. |
| L-5430 Sil Oil - | a silicone glycol copolymer surfactant containing reactive hydroxyl groups sold commercially by Union Carbide. |
| Zinc stearate - | internal release agent from Witco. |
| G-RRIM WALLASTOKUP | a surface modified wollastonite filler sold commercially by Nyco. This wollastonite has an aspect ratio of 10 to 15. |
| ASPRALOK 100F - | a fine grade of surface treated mica which was sold commercially by J.M. Huber Corp. |

Sample Preparation and Testing

In all the formulations listed in the following Examples, the ingredients of the B-component (amine component) were premixed in a low-sheer blender and charged into the B-component working tank of a Cincinnati Milacron RRIM machine. The isocyanate was charged into the A-component working tank of the machine. The components were conditioned at the indicated temperatures (see Tables 1 and 2 below) and injected at a rate of 2.72 Kg/sec (6 lb/sec) into a steel flat-plaque mould measuring 610 x 610 x 3 mm (24-in x 24-in x 0.125-in) which had been preheated to 68 to 71 °C (155 to 160 °F). The parts were released in 30 seconds and post-cured in a forced draft oven at 163 °C (325 °F) for 30 minutes. After samples were cut for properties, they were tested after conditioning for one week at 25 °C (77 °F) and 50% RH. The properties reported in the following Examples were determined parallel to flow unless otherwise noted. In the case of IZOD impact, both the parallel and the average parallel/perpendicular properties were reported.

Example 1

In Example 1, LOWMOD, MIDMOD and HIMOD formulations employing TEXRIM® F-4100, DETDA, Isocyanate A and G-RRIM Wollastokup filler were prepared according to the procedure outlined above. The neat modulus was varied by changing the DETDA level. Two levels of filler were employed at each DETDA level to bracket the filled modulus. The formulations and results are summarised in Table 1. Component amounts are listed in parts by weight (pbw). The first two formulations - A and B - are the LOWMOD type having a neat modulus of formulations normally used for automotive fascia - 0.24 GPa (about 35,000 psi). Here, about 40% of G-RRIM Wollastokup was needed to bring the modulus up to that used in body panels. Formulations E and F produce the HIMOD elastomers. This type of formulation is at present used to prepare body panels for automobiles. Here, by interpolation, about 23% of G-RRIM Wollastokup is needed to bring the modulus up to about 1.52 GPa (220,000 psi) parallel to flow. Formulations C and D have a neat modulus intermediate between these two extremes, and require about 30% of filler to bringing the modulus up into the body panel range.

Two of the more commonly reported impact results - IZOD impact (average of parallel and perpendicular properties) and Dynatup total energy at 25 °C (77 °F) - are summarised in Figures 1 and 2. Here, impact strength of the formulation is plotted against modulus of the filled part in the direction of flow. In this way, the impact strengths of the formulations can be compared at the same modulus. The results clearly show that at the desired modulus of 1.52 GPa (220,00 psi) both the IZOD and Dynatup total energy at 25 °C (77 °F) are improved when a formulation having lower neat modulus and higher filler content (LOWMOD and MIDMOD) is compared to the present formulation type (HIMOD).

The CLTE values reported in Table 1 also indicate that the high levels of filler in the LOWMOD and MIDMOD formulations contribute to much lower thermal expansion than the HIMOD formulations used at

present. The CLTE values for the LOWMOD formulation are almost half those of the HIMOD at the same modulus.

Table 1

| | LOWMOD | | MIDMOD | | HIMOD | |
|---|---|---|---|---|---|---|
| A-Component | A | B | C | D | E | F |
| Isocyanate A | 95.80 | 95.80 | 113.64 | 113.64 | 137.37 | 137.37 |
| B-Component | | | | | | |
| TEXRIM F-4100 | 74.00 | 74.00 | 68.00 | 68.00 | 60.00 | 60.00 |
| DETDA | 26.00 | 26.00 | 32.00 | 32.00 | 40.00 | 40.00 |
| Zinc strearate | 1.75 | 1.75 | 2.00 | 2.00 | 1.75 | 1.75 |
| L-5430 sil oil | 0.50 | 0.50 | 0.50 | 0.50 | 0.50 | 0.50 |
| G-RRIM Wallastokup | 106.67 | 132.06 | 72.05 | 92.63 | 59.90 | 79.87 |
| % Filler | 35 | 40 | 25 | 30 | 20 | 25 |
| A-Component Temp.°C | 55.6 | 56.1 | 58.3 | 55.6 | 52.8 | 53.9 |
| A-Component Temp.°F | 132 | 133 | 137 | 132 | 127 | 129 |
| B-Component Temp.°C | 78.3 | 77.8 | 82.8 | 78.9 | 82.2 | 85.0 |
| B-Component Temp.°F | 173 | 172 | 181 | 174 | 180 | 185 |
| Properties | | | | | | |
| Specific Gravity | 1.24 | 1.31 | 1.21 | 1.23 | 1.2 | 1.24 |
| Tensile, MPa | 16.8 | 20.2 | 21.2 | 22.8 | 25.6 | 28.2 |
| Tensile, psi | 2440 | 2930 | 3080 | 3300 | 3720 | 4090 |
| Elongation, % | 180 | 79.5 | 117 | 75 | 48.5 | 39 |
| Flex. Mod., GPa | | | | | | |
| Neat, 25°C | 0.23 | 0.23 | 0.33 | 0.33 | 0.52 | 0.52 |
| Filled, 25°C | 1.21 | 1.51 | 1.07 | 1.50 | 1.32 | 1.69 |
| Flex. Mod., psi | | | | | | |
| Neat, 25°C | 34000 | 34000 | 48000 | 48000 | 75000 | 75000 |
| Filled, 25°C | 176000 | 219000 | 155000 | 217000 | 191000 | 245000 |
| Heat sag, mm 15.25 cm/121°C (6"/250°F) | 5 | 4 | 4.5 | 2.5 | 2 | 1.1 |
| Heat sag, mm 15.25 cm/163°C (6"/325°F) | 9.5 | 7.5 | 9.5 | 5.5 | 3.4 | 2.8 |
| CLTE, C, x10-6 | 39.9 | 29.2 | 60.2 | 38.1 | 58.7 | 50.4 |
| IZOD Impact, J/m | 300.2 | 270.4 | 208.6 | 203.7 | 172.6 | 165.9 |
| IZOD Impact, In-Lb/In | 67.5 | 60.8 | 46.9 | 45.8 | 38.8 | 37.3 |
| IZOD, Av. PLL/PRP, J/m | 244.6 | 206.4 | 177.5 | 160.1 | 143.2 | 131.7 |
| IZOD, Av. PLL/PRP, In-Lb/In | 55 | 46.4 | 39.9 | 36 | 32.2 | 29.6 |
| Dynatup, 24°C (73°F) | | | | | | |
| Tot. Energy, J | 14.9 | 13.8 | 18.3 | 13.9 | 13.3 | 12.1 |
| Tot. Energy, In.Lb | 132 | 122 | 162 | 123 | 118 | 107 |
| Energy to Yield, J | 9.0 | 5.8 | 12.0 | 5.6 | 3.7 | 3.3 |
| Energy to Yield, In.Lb | 80 | 50.9 | 106 | 49.4 | 32.5 | 29 |
| Dynatup, -29°C (-20°F) | | | | | | |
| Tot. Energy, J | 15.9 | 18.6 | 16.3 | 14.7 | 17.3 | 16.2 |
| Tot. Energy, In.Lb | 141 | 165 | 144 | 130 | 153 | 143 |
| Energy to Yield, J | 1.4 | 1.2 | 1.1 | 0.9 | 1.2 | 1.1 |
| Energy to Yield,In.Lb | 12.4 | 10.9 | 9.7 | 8.36 | 11 | 9.65 |

(Av. PLL/PRP = average parallel/perpendicular)

Example 2

Table 2 compares LOWMOD and HIMOD formulations based on TEXRIM LMT-3001 instead of TEXRIM® F-4100 as in Example 1. The same procedures as used in Example 1 were also used here. Again, Figures 3 and 4 show that the formulations based on the low neat modulus elastomer have higher IZOD and Dynatup total energies than those based on the high neat modulus elastomer when compared to the same filled modulus at 25 ° C (77 ° F). This Example illustrates that the practice of this invention is not limited to the use of one particular polyetheramine.

Table 2

| A-Component | LOWMOD G | LOWMOD H | HIMOD I | HIMOD J |
|---|---|---|---|---|
| Isocyanate A | 99.94 | 99.94 | 143.00 | 143.00 |
| B-Component | | | | |
| TEXRIM LMT-3001 | 75.00 | 75.00 | 60.00 | 60.00 |
| DETDA | 25.00 | 25.00 | 40.00 | 40.00 |
| Zinc strearate | 1.75 | 1.75 | 2.40 | 2.40 |
| L-5430 sil oil | 0.50 | 0.50 | 0.50 | 0.50 |
| G-RRIM Wallastokup | 108.87 | 134.79 | 61.48 | 81.97 |
| % Filler | 35 | 40 | 20 | 25 |
| A-Component Temp.°C | 53.3 | 52.8 | 55.0 | 55.6 |
| A-Component Temp.°F | 128 | 127 | 131 | 132 |
| B-Component Temp.°C | 80.6 | 82.8 | 78.3 | 78.3 |
| B-Component Temp.°F | 177 | 181 | 173 | 173 |
| Properties | | | | |
| Specific Gravity | 1.28 | 1.36 | 1.16 | 1.19 |
| Tensile, MPa | 18.3 | 20.3 | 24.6 | 27.0 |
| Tensile, psi | 2650 | 2940 | 3570 | 3910 |
| Elongation, % | 62 | 45 | 118 | 76 |
| Flex. Mod., GPa | | | | |
| Neat, 25°C | 0.20 | 0.20 | 0.50 | 0.50 |
| Filled, 25°C | 1.10 | 1.53 | 0.70 | 1.68 |
| Flex. Mod., psi | | | | |
| Neat, 25°C | 29000 | 29000 | 72000 | 72000 |
| Filled, 25°C | 160000 | 222000 | 102000 | 244000 |
| Heat sag, mm 15.25 cm/121°C (6"/250°F) | 4.3 | 3.8 | 4 | 2.5 |
| Heat sag, mm 15.25 cm/163°C (6"/325°F) | 7.8 | 8.4 | 4.5 | 5 |
| IZOD, Impact, J/m | 266.9 | 249.1 | 149.5 | 150.3 |
| IZOD Impact, In-Lb/In | 60 | 56 | 33.6 | 33.8 |
| IZOD, Av. PLL/PRP, J/m | 219.7 | 199.3 | 121.4 | 116.1 |
| IZOD, Av. PLL/PRP, In-Lb/In | 49.4 | 44.8 | 27.3 | 26.1 |
| Dynatup, 23°C (73°F) | | | | |
| Tot. Energy, J | 14.1 | 14.5 | 12.9 | 13.4 |
| Tot. Energy, In.Lb | 125 | 128 | 114 | 119 |
| Energy to Yield, J | 5.4 | 4.2 | 4.1 | 3.3 |
| Energy to Yield, In.Lb | 48.2 | 37.4 | 36.21 | 29.2 |
| Dynatup, -29°C (-20°F) | | | | |
| Tot. Energy, J | 14.2 | 19.9 | 15.5 | 17.0 |
| Tot. Energy, In.Lb | 126 | 176 | 137 | 150 |
| Energy to Yield, J | 1.7 | 1.2 | 0.9 | 1.0 |
| Energy to Yield, In.Lb | 15 | 11 | 8.4 | 8.6 |

(Av. PLL/PRP = average parallel/perpendicular)

Example 3

A LOWMOD formulation consisting of TEXRIM® F-4100 (74 pbw), DETDA (26 pbw), zinc stearate (1.75 pbw), L-5430 sil oil (0.5 pbw) and ASPRALOK 38°C (100°F) (77.0 pbw) in the B-component 80°C (176°F) processing temperature and Isocyanate A (95.8 pbw) as the A-component was processed and tested

according to the procedures outlined in Example 1. The resulting part had a modulus of 1.47 GPa (213,000 psi), Izod impact of 89 J/m (20 in-lb/in) and a Dynatup dart impact of 13.2 J (117 in-lb) (total energy at 25 °C/77 °F). This Example demonstrates the use of other fillers in the practice of this invention.

Example 4

A LOWMOD formulation consisting of TEXRIM® F-4100 (74 pbw), DETDA (26 pbw), zinc stearate (1.75 pbw), L-5430 sil oil (0.5 pbw) and ASPRALOK 38 °C (100 °F) (77.2 pbw) in the B-component 80 °C (176 °F) processing temperature and Isocyanate B (83.2 pbw) as the A-component was processed and tested according to the procedures outlined in Example 1. The resulting part had a modulus of 1.54 GPa (224,000 psi), Izod impact of 78.3 J/m (17.6 in-lb per in) and a Dynatup dart impact of 11.3 J (100 in-lb) (total energy at 25 °C/77 °F). This Example demonstrates the use of other isocyanates in the practice of this invention.

**Claims**

**1.** A method for making a reinforced reaction injection moulded polyurea elastomer, comprising reacting, in a closed mould, an (A) component, comprising a polyisocyanate, a (B) component, comprising
(1) amine terminated polyethers; and
(2) a chain extender; and a filler,
characterised in that the chain extender is used in an amount that would provide an unfilled elastomer with a neat modulus between 0.14 and 0.41 GPa (20,000 and 60,000 psi); the filler is used in an amount that would provide a filled elastomer with a filled modulus between 1.38 and 2.07 GPa (200,000 and 300,000 psi), and in that the (A) component has a temperature between 49 and 66 °C (120 and 150 °F), the (B) component has a temperature between 66 and 93 °C (150 and 200 °F), and the (A) and (B) components are reacted at a temperature of 49 to 99 °C (120 to 210 °F).

**2.** A method according to Claim 1 characterised in that the amount of filler is between 20 and 45% by weight, based on total weight of (A) and (B).

**3.** A method according to Claim 1 or 2 characterised in that the amount of filler is between 25 and 40% by weight, based on total weight of (A) and (B).

**4.** A method according to any one of Claims 1 to 3 characterised in that the amount of filler is between 30 and 40% by weight, based on total weight of (A) and (B).

**5.** A method according to any one of Claims 1 to 4 characterised in that the chain extender is used in an amount providing an elastomer with a neat modulus of between 0.21 and 0.34 GPa (30,000 and 50,000 psi).

**6.** A method according to any one of Claims 1 to 5 characterised in that the filler is milled glass, flaked glass or glass spheres, wollastonite, or mica.

**7.** A method according to any one of Claims 1 to 6 characterised in that the filler has an aspect ratio of 8 to 100, and a length of 10 to 300 µm.

**8.** A reinforced reaction injection moulded polyurea elastomer comprising the reaction product of an (A) component which includes a polyisocyanate a (B) component which comprises
(1) an amine terminated polyoxyalkylene polyol; and
(2) a chain extender; and a filler,
characterised in that the chain extender is used in an amount necessary to provide a polyurea elastomer with a neat modulus of between 0.14 and 0.41 GPa (20,000 and 60,000 psi); and the filler is used in an amount sufficient to raise the modulus of the polyurea elastomer to a filled modulus of between 1.38 and 2.07 GPa (200,000 and 300,000 psi)

**9.** An automotive body panel comprising a reinforced reaction injection moulded polyurea elastomer according to Claim 8.

FIG. 1.

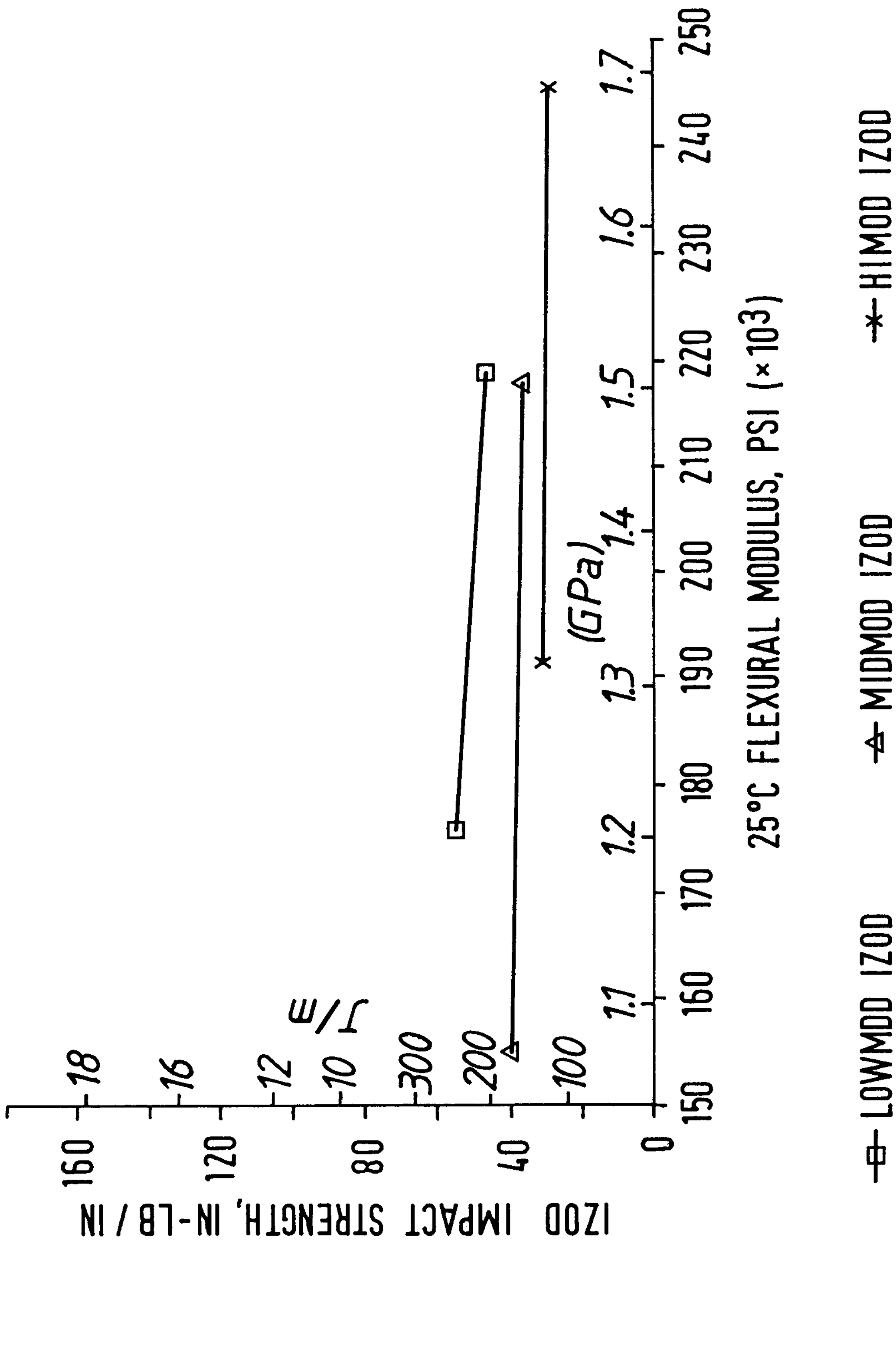
IZOD IMPACT STRENGTH, IN-LB / IN
0
40
80
120
160
J/m
100
200
300
10
12
16
18
25°C FLEXURAL MODULUS, PSI (×10³)
150
160
170
180
190
200
210
220
230
240
250
(GPa)
1.1
1.2
1.3
1.4
1.5
1.6
1.7
LOWMOD IZOD
MIDMOD IZOD
HIMOD IZOD

FIG. 2.

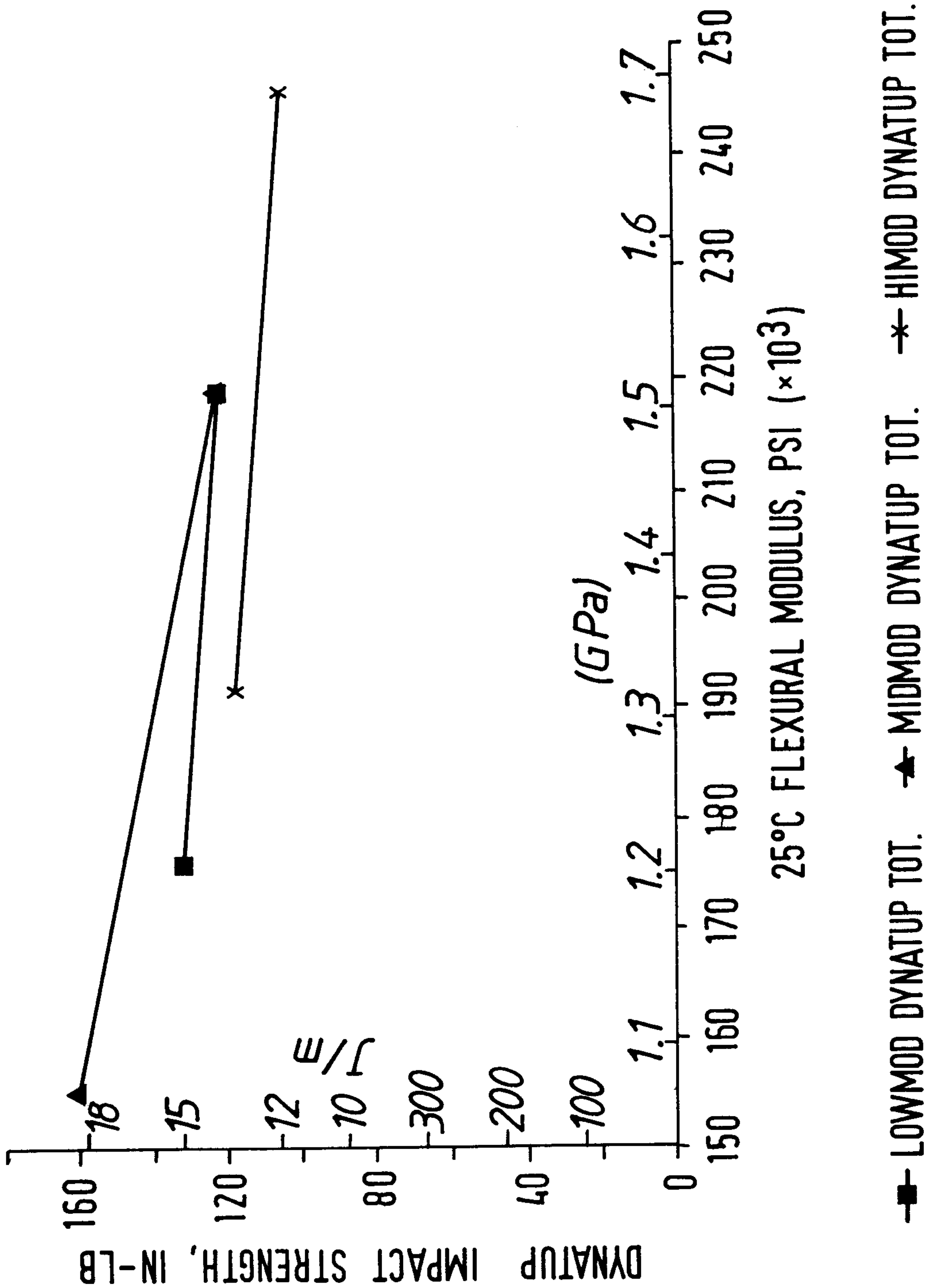
DYNATUP IMPACT STRENGTH, IN-LB
0
40
80
120
160
J/m
100
200
300
10
12
15
18
(GPa)
1.1
1.2
1.3
1.4
1.5
1.6
1.7
150
160
170
180
190
200
210
220
230
240
250
25°C FLEXURAL MODULUS, PSI (×10³)
LOWMOD DYNATUP TOT.
MIDMOD DYNATUP TOT.
HIMOD DYNATUP TOT.

FIG. 3.

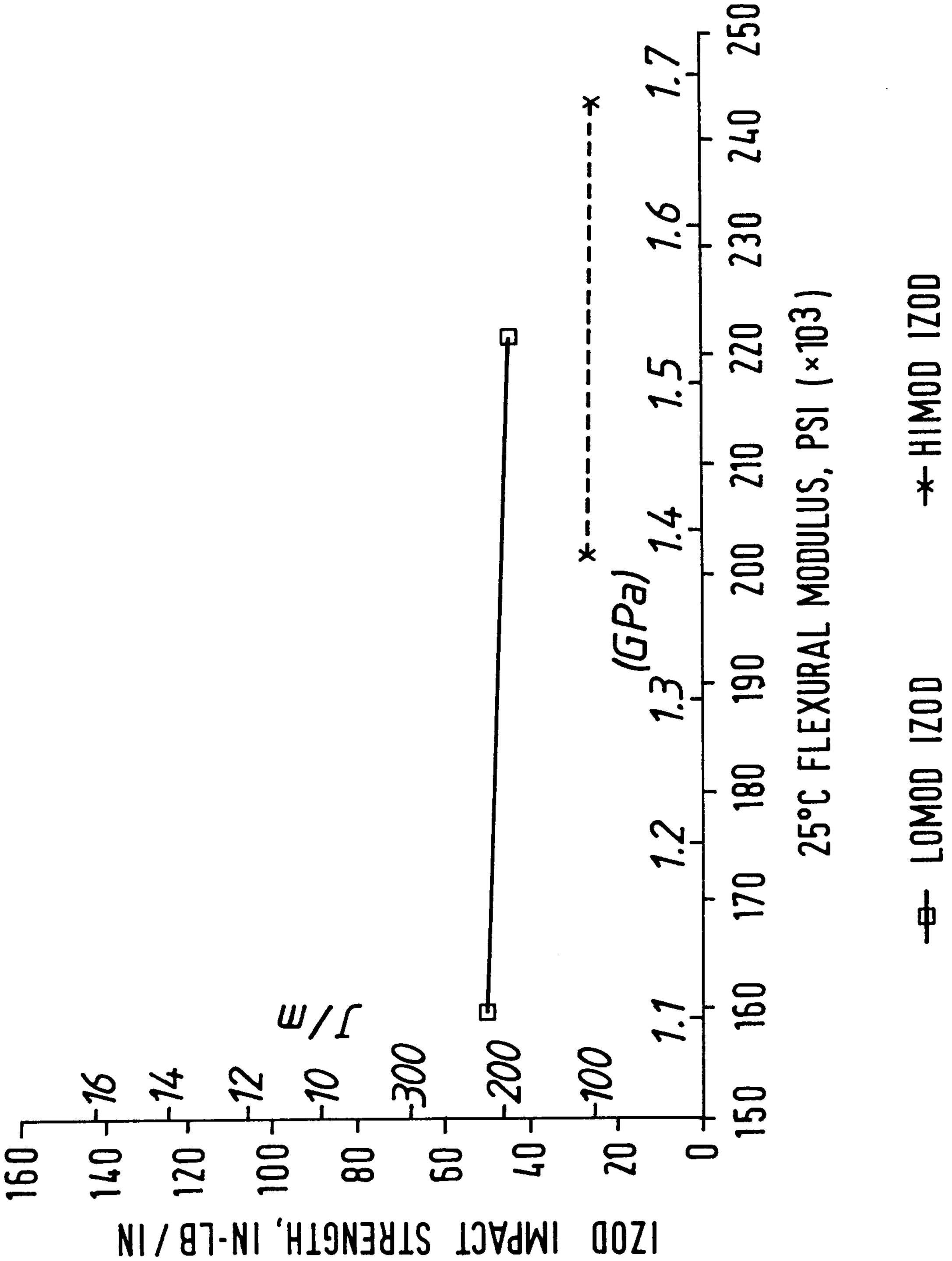
IZOD IMPACT STRENGTH, IN-LB / IN
0
20
40
60
80
100
120
140
160
J/m
100
200
300
10
12
14
16
150
160
170
180
190
200
210
220
230
240
250
1.1
1.2
1.3
1.4
1.5
1.6
1.7
(GPa)
25°C FLEXURAL MODULUS, PSI (×10³)
LOMOD IZOD
HIMOD IZOD

FIG. 4.

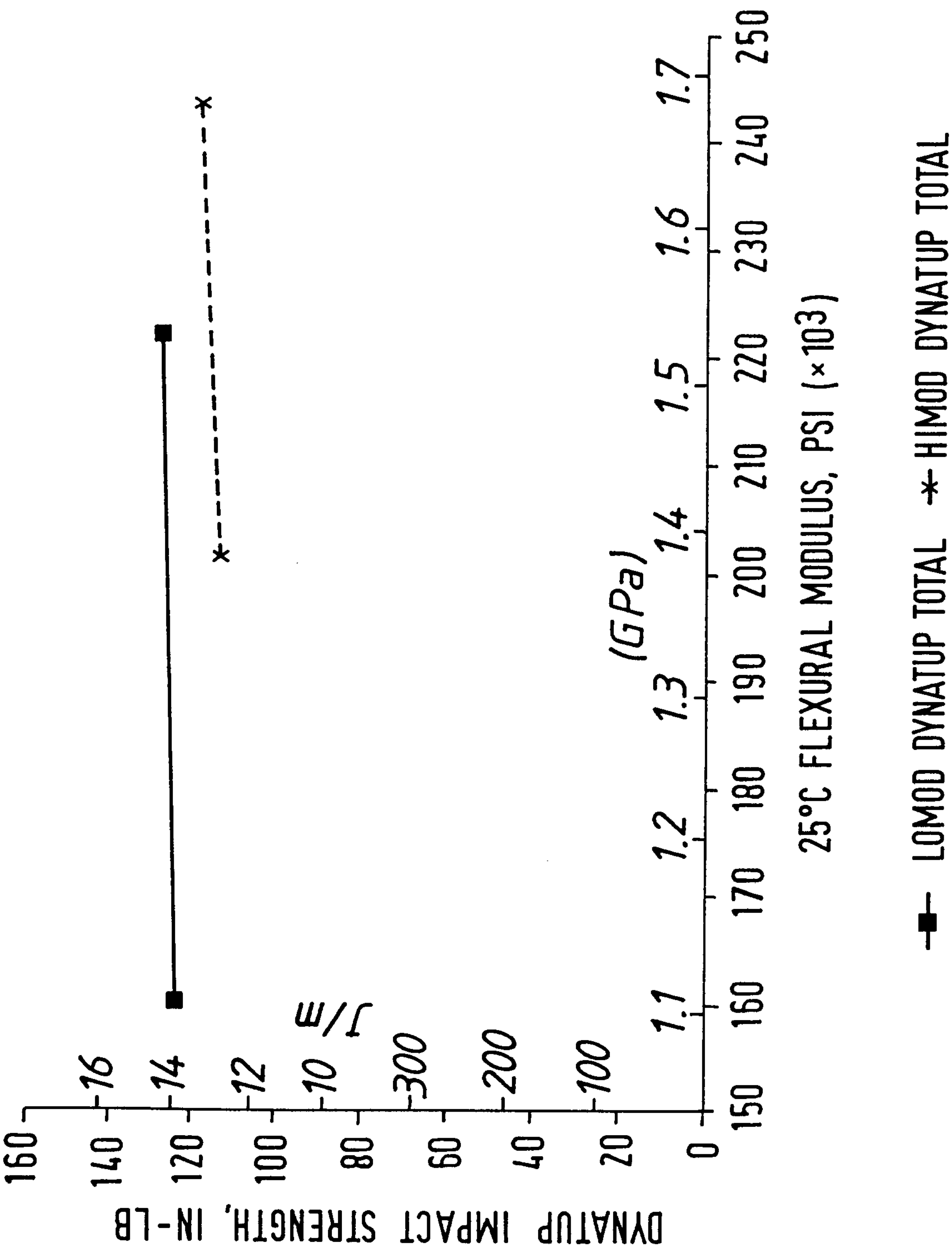
DYNATUP IMPACT STRENGTH, IN-LB
0
20
40
60
80
100
120
140
160
J/m
100
200
300
10
12
14
16
(GPa)
1.1
1.2
1.3
1.4
1.5
1.6
1.7
150
160
170
180
190
200
210
220
230
240
250
25°C FLEXURAL MODULUS, PSI (×10³)
LOMOD DYNATUP TOTAL
HIMOD DYNATUP TOTAL

European Patent Office

# EUROPEAN SEARCH REPORT

Application Number
EP 93 30 6941

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 395 969 (BAYER)<br>* page 4, line 40 - page 6, line 19; claims 1-4; example 6 *<br>--- | 1,2 | C08G18/50<br>C08G18/65<br>C08K7/10 |
| Y | EP-A-0 365 968 (DOW)<br>* page 4, line 3 - page 6, line 52; claims 1-8; example C *<br>--- | 1 | |
| Y | EP-A-0 401 630 (MOBAY)<br>* page 3, line 28 - page 7, line 28; claims 1-7; example 3 *<br>--- | 1 | |
| P,X | DE-A-41 13 417 (BAYER)<br>* page 2, line 45 - page 5, line 22; claim 1; examples *<br>--- | 1 | |
| A | DE-A-39 12 157 (BAYER)<br>* column 2, line 2 - column 5, line 1; claims 1-4 *<br>--- | 1 | |
| D,A | US-A-4 871 789 (MARTINEZ)<br>----- | | |

TECHNICAL FIELDS SEARCHED (Int.Cl.5)

C08G
C08K

The present search report has been drawn up for all claims

| Place of search | Date of completion of the search | Examiner |
|---|---|---|
| THE HAGUE | 20 December 1993 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)